# EUROPÄISCHE PATENTSCHRIFT

(11) **EP 0 874 877 B1**
(45) Veröffentlichungstag und Bekanntmachung des Hinweises auf die Patenterteilung: **01.09.1999**
(21) Anmeldenummer: 97901039.4
(22) Anmeldetag: 16.01.1997
(51) Int. Cl.: C09J 193/00, C09J 133/02, C09J 191/06

(54) **REDISPERGIERBARE TACKIFIERPULVER**
RE-DISPERSIBLE TACKIFYING POWDER
POUDRE COLLANTE REDISPERSABLE

(30) Priorität: 18.01.1996 DE 19601697
(43) Veröffentlichungstag der Anmeldung: 04.11.1998
(73) Patentinhaber: Wacker-Chemie GmbH, 81737 München (DE)
(72) Erfinder: FIGGE, Reiner, D-84539 Ampfing (DE); WEISSGERBER, Rudolf, D-84489 Burghausen (DE)
(74) Vertreter: Schuderer, Michael, Dr.
(86) Internationale Anmeldenummer: EP9700172
(87) Internationale Veröffentlichungsnummer: WO9726307

(56) Entgegenhaltungen:
- EP-A- 0 490 191
- EP-A- 0 620 243
- WO-A-92/08614

## Beschreibung

Die Erfindung betrifft redispergierbare Tackifierpulver sowie Klebemittel, welche redispergierbare Tackifierpulver in Pulverform oder in Form deren wäßrigen Redispersion enthalten.

Der Einsatz als Klebemittel ist ein wichtiges Anwendungsgebiet für Polymerisate, beispielsweise Homo- oder Mischpolymerisate von Vinylestern, (Meth)acrylsäureestern oder Styrol. Ein Beispiel hierfür ist die Verwendung von Vinylacetat-Ethylen-Copolymerisaten als Fußbodenkleber (EP-A 23360, US-A 4322330). In der EP-A 620243 wird die Verwendung von Vinylester-Acrylsäureester-Copolymeren als Haftkleber oder Fußbodenkleber beschrieben. Die DE-A 3737630 (US-A 4975481) betrifft Kontaktkleber auf der Basis von Ethylen-Vinylacetat-Copolymeren. Aus der EP-A 17986 (US-A 4322516) sind Haftklebemittel auf der Basis von Acrylsäureester-Vinylacetat-Ethylen-Mischpolymerisaten bekannt. Die EP-A 490191 (US-A 5196468) betrifft die Verwendung von wäßrigen Acrylatlatices als Fußbodenkleber. Die Polymerisate können dabei in den genannten Anwendungen prinzipiell in Form deren Pulver oder wäßrigen Dispersionen eingesetzt werden.

Speziell für den Einsatz als Haftkleber oder Fußbodenkleber ist oft der Zusatz von klebrigmachenden Substanzen, sogenannten "Tackifier" oder Tackifierharzen, zur Verbesserung der Klebrigkeit erforderlich. Die Tackifier können dabei gelöst in Weichmacher der wäßrigen Dispersion zugegeben werden (EP-A 23360). Aus der DE-A 3737360 ist bekannt, den Tackifier gelöst in organischem Lösungsmittel oder in Form dessen Schmelze der Polymerdispersion zuzugeben. Die EP-A 490191 beschreibt eine Vorgehensweise, bei der eine Schmelze aus Tackifierharz und oberflächenaktiver Substanzen der Klebemitteldispersion zugegeben wird. In der EP-A 620243 wird eine wäßrige Suspension des Tackifierharzes der Klebemitteldispersion zugegeben.

Nachteilig bei diesen Vorgehensweisen ist im Fall der Tackifier-Lösungen die Freisetzung des flüchtigen Lösungsmittels während oder nach der Verarbeitung. Die Zugabe von Tackifierharzen in Form deren Schmelze ist ein zeit- und energieaufwendiger Verfahrensschritt, der die Herstellung des Klebemittels verteuert. Bei der Zugabe wäßriger Tackifierdispersionen tritt eine normalerweise unerwünschte Verdünnung der Klebemitteldispersion auf. Weiter können wäßrige Tackifierdispersionen nicht ohne zusätzliche Verfahrensschritte homogen mit Klebemittelpulver vermischt werden.

Es bestand daher die Aufgabe, eine Tackifierzusammensetzung zur Verfügung zu stellen, mit denen sowohl pulverförmige, als auch wäßrige Klebemittel modifiziert werden können, ohne daß die obengenannten Nachteile auftreten.

Gelöst wurde die Aufgabe mit in Wasser redispergierbaren, pulverförmigen Tackifier-Zusammensetzungen, welche sich sowohl in pulverförmigen Klebemitteln als auch in wäßrigen Klebemitteldispersionen in einfacher Weise einsetzen lassen.

Gegenstand der Erfindung sind in Wasser redispergierbare Tackifierpulver-Zusammensetzungen enthaltend
a) ein oder mehrere klebrigmachende Substanzen,
b) 2 bis 50 Gew%, bezogen auf die Gesamttrockenmasse der klebrigmachenden Substanzen, einer oder mehrerer Verbindungen aus der Gruppe der wasserlöslichen, niedermolekularen Homo- oder Co-Polymerisate von olefinisch ungesättigten Mono- oder Dicarbonsäuren oder deren'Anhydriden, welche als Copolymerisate noch 2 bis 50 Mol% weiterer radikalisch polymerisierbarer Monomere enthalten, und der Phenolsulfonsäure-, Melaminsulfonsäure-, Naphthalinsulfonsäurekondensate, wobei die Wasserlöslichkeit der genannten Verbindungen mindestens 10 g in 100 g Wasser bei 23°C beträgt und deren Molekulargewicht ≤ 250000 g/mol, bestimmt als Gewichtsmittel, beträgt,
c) 0 bis 30 Gew%, bezogen auf das Gesamtgewicht polymerer Bestandteile, Antiblockmittel, sowie
d) 0 bis 50 Gew%, bezogen auf das Gesamtgewicht der Zusammensetzung, weiterer Zusatzstoffe.

Geeignete klebrigmachende Substanzen sind die üblicherweise als Tackifier eingesetzten Substanzen: Beispiele hierfür sind die Kolophoniumharze, welche auch als Balsamharze oder Tallharze bekannt sind, sowie deren Derivate wie dimerisiertes, disproportioniertes und hydriertes Kolophonium. Weitere Beispiele sind die Glykolester, Glycerinester und Pentaerythritester der Balsamharze wie Kolophoniumdiethylenglykolester, Kohlenwasserstoffharze, Polyterpenharze, Cumaron-Inden-Harze und Terpen-Phenol-Harze.

Geeignet sind auch hochsiedende Flüssigkeiten wie Butyldiglykolacetat, Butyldiglykol, Propylendiglykolether oder -ester, (2-Hydroxyethyl)phenylether und Weichmacher wie Phthalsäureester, Sebazinsäureester und Adipinsäureester. Die genannten Substanzen können auch in Form deren Gemische eingesetzt werden.

Bevorzugt sind die genannten Kolophoniumharze sowie deren Ester, Butyldiglykolacetat und (2-Hydroxyethyl)phenylether.

Als Komponente b) bevorzugt werden wasserlösliche, nicht-neutralisierte oder teilneutralisierte Homo- oder Copolymerisate von olefinisch ungesättigten Mono- oder Dicarbonsäuren oder deren Anhydride, beispielsweise Homo- oder Copolymerisate von Acrylsäure, Methacrylsäure oder Maleinsäure(anhydrid), insbesonders Polyacrylsäure oder Polymethacrylsäure. Bevorzugt sind weiter Copolymere mit Acrylsäure-, Methacrylsäure- oder Maleinsäure(anhydrid)-Einheiten und Einheiten damit copolymerisierbarer Monomere, wobei insbesonders der Säureanteil in diesen Copolymeren über 80 Mol% liegt. Beispiele für copolymerisierbare Monomere sind Alkene wie Ethylen oder Propylen, Vinylaromaten wie Styrol und vorzugsweise Acrylsäureester wie Butylacrylat, Methacrylsäureester wie Methylmethacrylat, Alkylvinylether wie Methylvinylether, Methacrylamid und Acrylamid. Beispiele für bevorzugte Copolymere sind Maleinsäure/Methylvinylether-, Methacrylsäure/Methylmethacrylat- und Methacrylsäure/Acrylamid-Copolymere. Unter "wasserlöslich" ist dabei eine Löslichkeit von mindestens 10 g in 100 g Wasser bei 23°C zu verstehen.

Die Molekulargewichte der genannten Polymerisate liegen im Bereich ≤ 250000 g/mol, vorzugsweise ≤ 150000 g/mol; besonders bevorzugt beträgt das Molekulargewicht von 5000 bis 50000 g/mol, bestimmt als Gewichtsmittel, beispielsweise mittels Gelpermeationschromatographie.

Die als Komponente b) beschriebenen Polymerisate werden üblicherweise in dem Fachmann bekannten Verfahren, beispielsweise Lösungspolymerisation oder Substanzpolymerisation, hergestellt. Vielfach sind diese Polymerisate auch im Handel erhältlich.

Die Menge der Komponente b) in der Tackifierpulver-Zusammensetzung beträgt vorzugsweise von 5 bis 35 Gew%, bezogen auf die Gesamttrockenmasse der klebrigmachenden Substanz.

Mittels Neutralisation der als Komponente b) bevorzugt genannten nicht-neutralisierten oder teilneutralisierten Homo- oder Copolymerisate von olefinisch ungesättigten Mono- oder Dicarbonsäuren oder deren Anhydride können Zusammensetzungen mit desaktiviertem Schutzkolloid zugänglich gemacht werden. Es wurde nämlich gefunden, daß in vielen Anwendungen sich die in den bekannten Dispersionspulvern eingesetzten Schutzkolloide negativ auf die Produkteigenschaften auswirken. Aufgrund des Schutzkolloid-Charakters der wasserlöslichen Verdüsungshilfen wird beispielsweise beim Einsatz in Klebstoffen, in vielen Fällen deren Klebrigkeit bzw. die Klebrigkeit der Tackifierzusätze wegen des Anteils an Verdüsungsschutzkolloid nachteilig beeinflußt.

Die Neutralisation kann dabei so erfolgen, daß eine Tackifierpulver-Zusammensetzung, welche bereits die entsprechende Menge an Neutralisationsmittel enthält, hergestellt wird, wobei die Menge an Neutralisationsmittel im Pulver so bemessen ist, daß sich der gewünschte pH-Bereich bei Redispergierung einstellt. Eine weitere Möglichkeit besteht darin, eine nicht mit Neutralisationsmittel modifizierte Tackifierpulver-Zusammensetzung in Wasser zu redispergieren und den gewünschten pH-Bereich durch nachträgliche Zugabe von Neutralisationsmittel wie z.B. NaOH, KOH oder Ca(OH)₂ einzustellen.

Falls die Neutralisation gewünscht wird, sind daher in der erfindungsgemäßen Tackifierpulver-Zusammensetzung vorzugsweise noch Neutralisationsmittel enthalten. Vorzugsweise werden diese dem Pulver nach der Trocknung, gegebenenfalls in Kombination mit weiteren pulverförmigen Zusatzstoffen zugemischt. Die Menge des einzusetzenden Neutralisationsmittels richtet sich nach der jeweiligen Tackifierpulver-Zusammensetzung und dem einzustellenden pH-Wert in den, mit dem Tackifierpulver und Wasser angemachten, Klebemitteldispersionen. Beispielsweise kann der geeignete pH durch Überprüfung der Redispergierbarkeit bei Einrühren von Tackifierpulver in Wasser, bei unterschiedlichen pH-Werten, leicht festgestellt werden. Als Neutralisationsmittel geeignet sind die üblichen anorganischen Basen; Beispiele hierfür sind NaOH, KOH, Ca(OH)2.

Falls Antiblockmittel zugesetzt wird, beträgt dessen Anteil vorzugsweise 4 bis 20 Gew%, bezogen auf das Gesamtgewicht polymerer Bestandteile. Beispiele für Antiblockmittel (Komponente c) sind fein gemahlene Aluminiumsilikate, Kieselgur, pyrogen erzeugtes Siliciumdioxid, Fällungskieselsäure, kolloidales Silicagel, Micro-Silica, Kaolin, Talkum, Diatomeerde, Calciumcarbonat und Magnesiumhydrosilikate. Besonders bevorzugt sind Antiblockmittel mit mittleren Teilchengrößen von 0.1 bis 50 µm.

Die Tackifierpulver-Zusammensetzung kann, je nach angestrebtem Einsatzgebiet, gegebenenfalls noch weitere Zusatzstoffe enthalten.

Gegebenenfalls können noch 0.5 bis 20 Gew%, bevorzugt 0.5 bis 10 Gew%, bezogen auf das Basispolymerisat, Hydrophobierungsmittel, zum Beispiel auf Basis von Polysiloxanen oder Metallseifen, enthalten sein.

Weiter können noch 0.1 bis 2.0 Gew%, bevorzugt 0.1 bis 1.0 Gew%, bezogen auf das Basispolymerisat, oberflächenaktive Substanzen wie Emulgatoren oder Netzmittel enthalten sein. Beispiele hierfür sind anionische sowie nichtionische Tenside.

Gegebenenfalls können auch noch 0.5 bis 15 Gew%, vorzugsweise 0.5 bis 10 Gew%, bezogen auf das Basispolymerisat, Verdickungsmittel zum Beispiel auf Basis von hochmolekularen Polyacrylsäuren enthalten sein.

Ein weiteres Beispiel für gebräuchliche Zusatzstoffe sind Entschäumer, welche gegebenenfalls zu einem Anteil von 0.05 bis 2.0 Gew%, vorzugsweise von 0.05 bis 1.0 Gew%, bezogen auf das Basispolymerisat, eingesetzt werden können.

Zur Herstellung der in Wasser redispergierbaren Tackifierpulver-Zusammensetzung wird die klebrigmachende Substanz, der Tackifier a) als wäßrige Dispersion oder Emulsion eingesetzt. Dieser Dispersion/Emulsion wird das Verdüsungsschutzkolloid b) vorzugsweise in Form einer wäßrigen Lösung zugesetzt und eingemischt. Es ist aber auch möglich, das Verdüsungsschutzkolloid, ganz oder teilweise, als wäßrige Lösung vorzulegen und die klebrigmachende Substanz (Tackifier) entweder in emulgierter/dispergierter Form oder direkt, in Substanz oder als Schmelze, zuzugeben. Voraussetzung für einen Einsatz nicht voremulgierter Komponente a) ist eine ausreichende Emulgierung bzw. Dispergierung in der wäßrigen Lösung der Komponente b), so daß eine homogene Dispersion bzw. Emulsion vorliegt. Die gegebenenfalls einzusetzenden Verdickungsmittel, oberflächenaktive Substanzen, Hydrophobierungsmittel, Entschäumer sowie gegebenenfalls weitere Zusatzstoffe werden vorzugsweise vor der Trocknung dem wäßrigen Gemisch zugegeben.

Nach Vermischen der Komponenten wird die Dispersion getrocknet, vorzugsweise sprühgetrocknet oder gefriergetrocknet, besonders bevorzugt sprühgetrocknet. Hierbei kann auf bekannte Vorrichtungen, wie zum Beispiel Versprühen durch Mehrstoffdüsen oder mit der Scheibe in einem gegebenenfalls erhitzten Trockengasstrom zurückgegriffen werden. Im allgemeinen wird Luft, Stickstoff und mit Stickstoff angereicherte Luft als Trockengas eingesetzt, wobei die Trockengastemperatur im allgemeinen 250°C nicht überschreitet. Die optimale Temperatur des Trockengases kann in wenigen Versuchen ermittelt werden; oft haben sich Trockengastemperaturen über 60°C besonders bewährt.

Zur Erhöhung der Lagertemperatur, beispielsweise um ein Verbacken und Verblocken zu verhindern und/oder um die Rieselfähigkeit des Pulvers zu verbessern, kann das Pulver mit einem Antiblockmittel c) versetzt werden. Dies erfolgt vorzugsweise solange das Pulver noch fein verteilt ist, zum Beispiel noch im Trockengas suspendiert ist. Insbesondere wird das Antiblockmittel getrennt aber gleichzeitig mit der Dispersion in die Trocknungsvorrichtung dosiert.

Soll die Tackifierpulver-Zusammensetzung ein oder mehrere Neutralisationsmittel enthalten, so werden diese vorzugsweise in fester Form dem Tackifierpulver zugesetzt. Die Neutralisationsmittel können auch getrennt aber gleichzeitig mit der Dispersion in die Trocknungsvorrichtung dosiert werden. Für diese Verfahrensvariante hat sich die Sprühtrocknung besonders bewährt.

Die Tackifierpulver-Zusammensetzung wird den klebrig zu modifizierenden pulverförmigen Klebemitteln oder wäßrigen Klebemitteldispersionen zugegeben. Das Tackifierpulver kann dabei in Pulverform oder in Form einer wäßrigen Dispersion zugegeben werden. Die Einsatzmenge liegt dabei im allgemeinen bei 1 bis 150 Gew% Tackifierpulver, bezogen auf das Basispolymerisat im Klebemittel.

Ein weiterer Gegenstand der Erfindung sind pulverförmige Klebemittel und wäßrige Klebemitteldispersionen, welche die Tackifierpulver-Zusammensetzung in Pulverform oder in Form deren wäßrigen Redispersion enthalten.

Geeignete Klebemittelpulver oder wäßrige Klebemitteldispersionen sind solche auf der Basis von wasserunlöslichen Polymerisaten aus der Gruppe der Homo- und Copolymerisate von Vinylestern, Acrylsäureestern, Methacrylsäureestern, Styrol und Vinylchlorid oder einem Gemisch der genannten Basispolymerisate.

Geeignete Vinylester-Homo- oder -Copolymerisate enthalten ein oder mehrere Monomereinheiten aus der Gruppe der Vinylester von unverzweigten oder verzweigten Carbonsäuren mit 1 bis 18 C-Atomen. Geeignete (Meth)acrylsäureester-Polymerisate sind Homo- und Copolymerisate der Acrylsäure und Methacrylsäure mit unverzweigten oder verzweigten Alkoholen mit 1 bis 18 C-Atomen.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 5 oder 9 bis 10 C-Atomen, beispielsweise VV5^{R}, VeoVa9^{R} oder VeoVa10^{R}. Besonders bevorzugt ist Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, iso-Butylacrylat, iso-Butylmethacrylat, t-Butylacrylat, t-Butylmethacrylat, 2-Ethylhexylacrylat, 2-Ethylhexylmethacrylat. Besonders bevorzugt sind Methylacrylat, Methylmethacrylat, n-Butylacrylat und 2-Ethylhexylacrylat.

Beispiele für geeignete Vinylester-Polymerisate sind:
Vinylester-Homopolymerisate wie Vinylacetat-Homopolymerisat;
Vinylester-Ethylen-Copolymere wie Vinylacetat-Ethylen-Copolymere mit einem Ethylengehalt von 1 bis 60 Gew%;
Vinylester-Ethylen-Vinylchlorid-Copolymerisate wie Vinylacetat-Ethylen-Vinylchlorid-Copolymere mit einem Ethylengehalt von 1 bis 40 Gew% und einem Vinylchlorid-Gehalt von 20 bis 80 Gew%;
Vinylacetat-Copolymere mit 1 bis 50 Gew% eines oder mehrerer copolymerisierbarer Vinylester wie Vinyllaurat, Vinylpivalat, Vinyl-2-ethylhexansäureester, Vinylester einer α-verzweigten Carbonsäure, insbesonders Versaticsäure-Vinylester (VeoVa9^{R}, VeoVa10^{R}), welche gegebenenfalls noch 1 bis 40 Gew% Ethylen enthalten;
Vinylester-Acrylsäureester-Copolymerisate mit 30 bis 90 Gew% Vinylester, insbesonders Vinylacetat, und 1 bis 60 Gew% Acrylsäureester, insbesonders n-Butylacrylat oder 2-Ethylhexylacrylat, welche gegebenenfalls noch 1 bis 40 Gew% Ethylen enthalten;
Vinylester-Acrylsäureester-Copolymerisate mit 30 bis 75 Gew% Vinylacetat, 1 bis 30 Gew% Vinyllaurat oder Vinylester einer α-verzweigten Carbonsäure, insbesonders Versaticsäure-Vinylester, 1 bis 30 Gew% Acrylsäureester, insbesonders n-Butylacrylat oder 2-Ethylhexylacrylat, welche gegebenenfalls noch 1 bis 40 Gew% Ethylen enthalten;
Vinylester-Copolymerisate mit Estern der Maleinsäure oder Fumarsäure wie Diisopropyl-, Di-n-butyl, Di-t-butyl-, Diethylhexyl-, Methyl-t-butyl-Ester, beispielsweise Vinylacetat-Copolymerisate mit 10 bis 60 Gew% eines oder mehrerer der genannten Malein-/Fumarsäure-Ester, welche gegebenenfalls noch Ethylen oder weitere copolymerisierbare Vinylester wie Vinyllaurat oder Versaticsäure-Vinylester enthalten.

Beispiele für geeignete (Meth)acrylsäurepolymerisate sind: Homopolymerisate von n-Butylacrylat oder 2-Ethylhexylacrylat;
Copolmerisate mit 35 bis 65 Gew% Methylmethacrylat, 65 bis 35 Gew% n-Butylacrylat und/oder 2-Ethylhexylacrylat.

Beispiele für Vinylchlorid-Polymerisate sind neben den obengenannten Vinylester/Vinylchlorid-Copolymerisaten Vinylchlorid-Ethylen-Copolymere.

Beispiele für Styrol-Polymerisate sind Styrol-Butadien-Copolymere und Styrol-Acrylsäureester-Copolymere wie Styrol-n-Butylacrylat oder Styrol-2-Ethylhexylacrylat mit einem Styrol-Gehalt von jeweils 1 bis 70 Gew%.

Gegebenenfalls enthalten die genannten Polymerisate noch 0.05 bis 30.0 Gew%, vorzugsweise 0.5 bis 15 Gew%, jeweils bezogen auf das Gesamtgewicht des Polymerisats, ein oder mehrere Hilfsmonomereinheiten zur Verbesserung der Wasserlöslichkeit, zur Vernetzung oder zur Modifikation der Haftungseigenschaften.

Geeignete Hilfsmonomere zur Verbesserung der Wasserlöslichkeit sind beispielsweise α,β-monoethylenisch ungesättigte Mono- und Dicarbonsäuren und deren Amide, wie Acrylsäure, Methacrylsäure, Maleinsäure, Fumarsäure, Itaconsäure, Acrylamid, Methacrylamid; ethylenisch ungesättigte Sulfonsäuren bzw. deren Salze, vorzugsweise Vinylsulfonsäure, 2-Acrylamido-propansulfonat und/oder N-Vinylpyrrolidon.

Vernetzend wirkende Monomereinheiten sind vorzugsweise zu 0.5 bis 5.0 Gew%, bezogen auf das Gesamtgewicht des Polymerisats, im Polymerisat enthalten. Beispiele hierfür sind N-Methylolacrylamid, N-Methylolmethacrylamid; N-(Alkoxymethyl)acrylamide oder N-(Alkoxymethyl)methacrylamide mit einem C₁- bis C₆-Alkylrest, wie N-(Isobutoxymethyl)-acrylamid (IBMA), N-(Isobutoxymethyl)-methacrylamid (IBMMA), N-(n-Butoxymethyl)-acrylamid (NBMA), N-(n-Butoxymethyl)-methacrylamid (NBMMA); mehrfach ethylenisch ungesättigten Comonomere wie Ethylenglycoldiacrylat, 1,3-Butylenglycoldiacrylat, 1,4-Butylenglycoldiacrylat, Propylenglycoldiacrylat, Divinyladipat, Divinylbenzol, Vinylmethacrylat, Vinylacrylat, Allylmethacrylat, Allylacrylat, Diallylmaleat, Diallylphthalat, Diallylfumarat, Methylenbisacrylamid, Cyclopentadienylacrylat oder Triallylcyanurat.

Insbesonders eignen sich die mit dem Tackifierpulver modifizierten Klebemittelpulver oder wäßrigen Klebemitteldispersionen zum Einsatz in Haftklebstoffen, Fußbodenklebstoffen und in Bauklebern.

### BEISPIELE:

### Verwendete Substanzen:

### Tackifier T-1:

Snowtack-52CF: Emulgatorstabilisierte wäßrige Emulsion eines Kolophoniumharzes mit einem Festgehalt von 50 % der Fa. Tenneco.

### Dispersion DI-1:

Emulgatorstabilisierte wäßrige Dispersion mit einem Festgehalt von 60 % auf der Basis eines Vinylacetat-Ethylen-Ethylhexylacrylat-Copolymeren mit einem 2-Ethylhexylacrylatgehalt von 48 Gew%, einem Vinylacetat-Gehalt von 36 Gew% und einem Ethylengehalt von 16 Gew%.

### Dispersionspulver DP-1:

Redispergierbares Pulver auf Basis der Dispersion DI-1 mit 20 Gew.%, bezogen auf den Festgehalt der Basisdispersion, Polymethacrylsäure als Verdüsungsschutzkolloid.

### Verdüsungsschutzkolloid Sokalan-CP13:

Sokalan CP13 ist eine modifizierte Polyacrylsäure mit einem Molekulargewicht von ca. 20000 der Fa. BASF.

### Verdüsungsschutzkolloid Versicol-K11:

Versicol-K11 ist eine Polymethacrylsäure mit einem Molekulargewicht von ca. 10000 der Fa. Allied Colloids.

### Verdüsungsschutzkolloid Suparex-PD41

Suparex-PD41 ist ein niedermolekulares Phenolsulfonsäure-Formaldehyd-Kondensationsprodukt der Fa. Hodgson, UK.

### Verdüsungsschutzkolloid Vinnapas M13/140:

Vinnapas M13/140 ist ein Polyvinylalkohol mit Hydrolysierungsgrad 86-89 Mol% der Wacker-Chemie GmbH.

### Beispiel 1:

4000 Gew.Teile Tackifier T-1, 1600 Gew.Teile Versicol-Kll als 25 %-ige wäßrige Lösung (20 % auf T-1-Harz) wurden gründlich gemischt. Der pH-Wert der Dispersion betrug 3,8. Die Mischung wurde mittels einer Zweistoffdüse sprühgetrocknet. Als Verdüsungskomponente diente auf 3 bar vorgepreßte Luft; die gebildeten Tröpfchen wurden mit auf 120°C erhitzter Trocknungsluft im Gleichstrom getrocknet. Das erhaltene trockene Pulver wurde mit 10 Gew% eines handelsüblichen Antiblockmittels auf Kaolin-Basis abgemischt.

### Beispiel 2:

4000 Gew.Teile Tackifier T-1, 1429 Gew.Teile Sokalan-CP13 als 28 %-ige wäßrige Lösung (20 % auf T-1-Harz) wurden gründlich gemischt. Der pH-Wert der Mischung betrug 3,9. Die Pulverherstellung erfolgte analog zu Beispiel 1.

### Beispiel 3:

4000 Gew.Teile Tackifier T-1, 851 Gew.Teile Suparex-PD41 als 47 %-ige wäßrige Lösung (20 % auf T-1-Harz) wurden gründlich gemischt. Der pH-Wert der Mischung betrug 6,9. Die Pulverherstellung erfolgte analog zu Beispiel 1.

### Vergleichsbeispiel 1:

4000 Gew.Teile Tackifier T-1, 3636 Gew.Teile M13/140 als 11 %-ige wäßrige Lösung (20 % auf T-1-Harz) wurden gründlich gemischt. Der pH-Wert der Mischung betrug 7,6. Die Pulverherstellung erfolgte analog zu Beispiel 1.

### Anwendungstechnische Untersuchungen:

### Desaktivierung des Verdüsungsschutzkolloids:

Zur Untersuchung der Desaktivierung des Verdüsungsschutzkolloids wurde der Einfluß des pH-Werts der zu verdüsenden Dispersion auf die Redispergierbarkeit der daraus erhältlichen Tackifierpulver untersucht. Dazu wurden 50 g des jeweiligen Tackifierpulvers in 50 g Wasser eingerührt und die Redispergierbarkeit qualitativ bewertet. Tabelle 1 zeigt, wie durch Neutralisation des Schutzkolloids dieses desaktiviert wird und durch einfache pH-Änderung aus redispergierbaren Systemen nicht redispergierbare werden. Je schlechter die Redispergierbarkeit in diesem Test, desto besser ist die klebrigmachende Wirkung beim Einsatz als Tackifier.

**Tabelle 1:**

| Tackifierpulver | pH des Verdüsungsansatzes | Redispergierbarkeit |
|---|---|---|
| Beispiel 1 | 3,8 | gut |
| Beispiel 2 | 3,9 | gut |
| Beispiel 3 | 6,9 | mäßig |
| Vergl.bsp. 1 | 3,4 | sehr schlecht |

### Testung der Klebrigkeit:

Zur Testung des klebrigmachenden Effektes des erfindungsgemäßen Tackifierpulvers wurden jeweils wäßrige Klebemittel-Dispersionen der im folgenden genannten Zusammensetzungen hergestellt. Zur Herstellung der wäßrigen Klebemitteldispersionen wurden als Ausgangsmaterialien die Dispersion DI-1, eine 50 %-ige Redispersion des Dispersionspulvers DP-1 sowie eine 50 %-ige Redispersion des Tackifierpulvers aus Beispiel 1 eingesetzt.

### Klebemittel 1 (Vergleich):

Wäßrige Redispersion von Dispersionspulver DP-1 mit einem Festgehalt von 50 %.

### Klebemittel 2:

Mischung der Redispersionen des Dispersionspulvers DP-1 und des Tackifierpulvers aus Beispiel 1 in einem Gewichtsverhältnis von 60/40 mit einem pH-Wert der Mischung von 3,9.

### Klebemittel 3:

Mischung der Redispersionen von DP-1 und Tackifierpulver aus Beispiel 1 im Gewichtsverhältnis von 60/40. Der pH-Wert der Mischung wurde mit Ammoniak auf pH 7,3 eingestellt.

### Klebemittel 4:

Mischung aus Dispersion DI-1 und Redispersion des Tackifierpulvers aus Beispiel 1 im Gewichtsverhältnis 60/40 (Festgehalt auf Festgehalt berechnet). Der pH-Wert der Mischung betrug 4,4.

### Klebemittel 5:

Mischung aus Dispersion DI-1 und Redispersion des Tackifierpulvers aus Beispiel 1 im Gewichtsverhältnis 60/40 (Festgehalt auf Festgehalt berechnet). Der pH-Wert der Mischung wurde mit Ammoniak auf pH 7,3 eingestellt.

Diese Klebemittel-Dispersionen wurden auf eine Weich-PVC-Folie mit einem Kastenrakel in gleichmäßiger Dicke in einer solchen Menge aufgetragen, daß nach der Trocknung ein Trockenauftragsgewicht von ca. 50 g/m² erhalten wurde. Die Trocknung erfolgte während 30 Minuten bei 70°C im Umlufttrockenschrank. Nach Abkühlen auf Raumtemperatur wurde die Oberflächenklebrigkeit der Beschichtungen geprüft. Dazu wurde die Klebrigkeit durch Antippen mit dem vorher gesäuberten Finger beurteilt und qualitativ bewertet. Außerdem wurde zur Prüfung der Klebrigkeit Schreibmaschinenpapier (80 g/m²) mit dem Daumen 5 Sekunden mit gleichmäßigem Druck auf die Oberfläche der Beschichtungen gepreßt und danach sofort wieder abgezogen. Das Verhalten beim Abziehen wurde qualitativ beurteilt.
Die Testergebnisse sind in Tabelle 2 zusammengefaßt.

**Tabelle 2:**

| Klebemittel | Oberflächenklebrigkeit geprüft durch | |
|---|---|---|
| | Antippen | Papierabzug |
| 1 | trocken | keine Adhäsion |
| 2 | leicht klebrig | Knistern beim Ablösen |
| 3 | klebrig | leichter Faserausriß |
| 4 | klebrig | leichter Faserausriß |
| 5 | stark klebrig | vollständiger Papierausriß |

## Patentansprüche

1. In Wasser redispergierbare Tackifierpulver-Zusammensetzungen enthaltend
a) ein oder mehrere klebrigmachende Substanzen,
b) 2 bis 50 Gew%, bezogen auf die Gesamttrockenmasse der klebrigmachenden Substanzen, einer oder mehrerer Verbindungen aus der Gruppe der wasserlöslichen, niedermolekularen Homo- oder Co-Polymerisate von olefinisch ungesättigten Mono- oder Dicarbonsäuren oder deren Anhydriden, welche als Copolymerisate noch 2 bis 50 Mol% weiterer radikalisch polymerisierbarer Monomere enthalten, und der Phenolsulfonsäure-, Melaminsulfonsäure-, Naphthalinsulfonsäurekondensate, wobei die Wasserlöslichkeit der genannten Verbindungen mindestens 10 g in 100 g Wasser bei 23°C beträgt und deren Molekulargewicht ≤ 250000 g/mol, bestimmt als Gewichtsmittel, beträgt,
c) 0 bis 30 Gew%, bezogen auf das Gesamtgewicht polymerer Bestandteile, Antiblockmittel, sowie
d) 0 bis 50 Gew%, bezogen auf das Gesamtgewicht der Zusammensetzung, weiterer Zusatzstoffe.

2. Tackifierpulver-Zusammensetzung nach Anspruch 1, dadurch gekennzeichnet, daß als klebrigmachende Substanzen Kolophoniumharze und deren Derivate, Kohlenwasserstoffharze, Polyterpenharze, Cumaron-Inden-Harze, Terpen-Phenol-Harze; hochsiedende Flüssigkeiten wie Butyldiglykolacetat, Butyldiglykol, Propylendiglykolether oder -ester, (2-Hydroxyethyl)phenylether; Weichmacher wie Phthalsäureester, Sebazinsäureester, Adipinsäureester; oder Gemische der genannten Substanzen enthalten sind.

3. Tackifierpulver-Zusammensetzung nach Anspruch 1 oder 2, dadurch gekennzeichnet, daß als Komponente b) wasserlösliche, nicht-neutralisierte oder teilneutralisierte Homo- oder Copolymerisate von olefinisch ungesättigten Mono- oder Dicarbonsäuren oder deren Anhydride enthalten sind.

4. Tackifierpulver-Zusammensetzung nach Anspruch 3, dadurch gekennzeichnet, daß als Komponente b) Homo- oder Copolymerisate von Acrylsäure, Methacrylsäure oder Maleinsäure(anhydrid), mit einem Molekulargewicht ≤ 150000 g/mol enthalten sind.

5. Tackifierpulver-Zusamensetzung nach Anspruch 4, dadurch gekennzeichnet, daß Polyacrylsäure, Polymethacrylsäure, Copolymere mit Acrylsäure-, Methacrylsäure- oder Maleinsäure(anhydrid)-Einheiten und Einheiten damit copolymerisierbarer Monomere, wobei der Säureanteil in diesen Copolymeren über 80 Mol% liegt, enthalten sind.

6. Pulverförmige Klebemittel und wäßrige Klebemitteldispersionen auf der Basis von wasserunlöslichen Polymerisaten aus der Gruppe der Homo- und Copolymerisate von Vinylestern, Acrylsäureestern, Methacrylsäureestern, Styrol und Vinylchlorid oder einem Gemisch der genannten Basispolymerisate, welche die Tackifierpulver-Zusammensetzung gemäß Anspruch 1 bis 5 in Pulverform oder in Form deren wäßrigen Redispersion enthalten.

7. Verwendung der pulverförmigen Klebemittel und wäßrigen Klebemitteldispersionen gemäß Anspruch 6 in Haftklebstoffen, Fußbodenklebstoffen und in Bauklebern.

## Claims

1. Water-redispersible tackifier powder compositions comprising
a) one or more tackifying substances,
b) from 2 to 50% by weight, based on the overall dry mass of the tackifying substances, of one or more compounds from the group consisting of water-soluble, low molecular mass homopolymers or copolymers of olefinically unsaturated mono- or dicarboxylic acids or their anhydrides, which as copolymers also contain from 2 to 50 mol% of further free-radically polymerizable monomers, and of phenolsulphonic, melaminesulphonic and naphthalenesulphonic acid condensates, the water-solubility of the said compounds being at least 10 g in 100 g of water at 23°C and their molecular weight being ≤ 250,000 g/mol, determined as the weight average,
c) from 0 to 30% by weight, based on the overall weight of polymeric constituents, of antiblocking agents, and
d) from 0 to 50% by weight, based on the overall weight of the composition, of other additives.

2. Tackifier powder composition according to Claim 1, characterized in that tackifying substances present are rosins and their derivatives, hydrocarbon resins, polyterpene resins, coumarone-indene resins, terpene-phenol resins; high-boiling liquids such as butyldiglycol acetate, butyldiglycol, propylene diglycol ethers or esters, 2-hydroxyethyl phenyl ether; plasticizers such as phthalates, sebacates and adipates; or mixtures of these substances.

3. Tackifier powder composition according to Claim 1 or 2, characterized in that as component b) watersoluble, unneutralized or partially neutralized homopolymers or copolymers of olefinically unsaturated mono- or dicarboxylic acids or their anhydrides are present.

4. Tackifier powder composition according to Claim 3, characterized in that as component b) homopolymers or copolymers of acrylic acid, methacrylic acid or maleic acid (anhydride), with a molecular weight ≤ 150,000 g/mol are present.

5. Tackifier powder composition according to Claim 4, characterized in that polyacrylic acid, polymethacrylic acid, copolymers with acrylic, methacrylic or maleic acid (anhydride) units and units of monomers copolymerizable therewith are present, the acid content of these copolymers being more than 80 mol%.

6. Pulverulent adhesives and aqueous adhesive dispersions based on water-insoluble polymers from the group consisting of the homopolymers and copolymers of vinyl esters, acrylic esters, methacrylic esters, styrene and vinyl chloride or a mixtures of these base polymers, comprising the tackifier powder composition according to Claims 1 to 5 in powder form or in the form of its aqueous redispersion.

7. Use of the pulverulent adhesives and aqueous adhesive dispersions according to Claim 6 in contact adhesives, flooring adhesives and in structural adhesives.

## Revendications

1. Compositions pulvérulentes rendant collant redispersables dans l'eau contenant
a) une ou plusieurs substances rendant adhésif ;
b) 2 à 50% en poids, sur base de la masse sèche totale des substances rendant adhésif, d'un ou plusieurs composés du groupe des homopolymères ou copolymères de bas poids moléculaire solubles dans l'eau, d'acides monocarboxyliques ou dicarboxyliques oléfiniquement insaturés ou de leurs anhydrides, lesquels contiennent comme copolymères encore 2 à 50% en mole d'autres monomères polymérisables par voie radicalaire, et des condensats d'acide phénolsulfonique, d'acide mélaminesulfonique, d'acide naphtalènesulfonique, la solubilité dans l'eau desdits composés valant au moins 10 g dans 100 g d'eau à 23°C et leur poids moléculaire valant ≤ 250 000 g/mole, déterminé comme moyenne en poids;
c) 0 à 30% en poids, sur base du poids total des constituants polymères, d'agents antiblocage, ainsi que
d) 0 à 50% en poids, sur base du poids total de la composition, d'autres additifs.

2. Composition pulvérulente rendant collant suivant la revendication 1, caractérisée en ce qu'elle contient comme substances rendant adhésif des résines de colophane et leurs dérivés, des résines hydrocarbonées, des résines de polyterpène, des résines de coumarone-indène, des résines de terpène-phénol; des liquides à haut point d'ébullition comme l'acétate de butyldiglycol, le butyldiglycol, des éthers ou esters de propylènediglycol, le (2-hydroxyéthyl)phényléther; des plastifiants comme les esters d'acide phtalique, les esters d'acide sébacique, les esters d'acide adipique; ou des mélanges desdites substances.

3. Composition pulvérulente rendant collant suivant la revendication 1 ou 2, caractérisée en ce qu'elle contient comme composant b) des homopolymères ou des copolymères solubles dans l'eau, non neutralisés ou partiellement neutralisés d'acides monocarboxyliques ou dicarboxyliques oléfiniquement insaturés ou leurs anhydrides.

4. Composition pulvérulente rendant collant suivant la revendication 3, caractérisée en ce qu'elle contient comme composant b) des homopolymères ou des copolymères d'acide acrylique, d'acide méthacrylique ou d'acide (anhydride) maléique, avec un poids moléculaire ≤ 150 000 g/mole.

5. Composition pulvérulente rendant collant suivant la revendication 4, caractérisée en ce qu'elle contient de l'acide polyacrylique, de l'acide poly(méthacrylique), des copolymères avec des unités d'acide acrylique, d'acide méthacrylique ou d'acide (anydride) maléique et des unités de monomères copolymérisables avec celles-ci, la proportion d'acide dans ces copolymères étant supérieure à 80% en mole.

6. Adhésifs sous forme de poudre et dispersions adhésives aqueuses à base de polymères insolubles dans l'eau du groupe des homopolymères et copolymères d'esters de vinyle, d'esters d'acide acrylique, d'esters d'acide méthacrylique, de styrène et de chlorure de vinyle ou d'un mélange desdits polymères de base, lesquels contiennent la composition pulvérulente rendant collant suivant les revendications 1 à 5 sous forme de poudre ou sous forme de leur redispersion aqueuse.

7. Utilisation des adhésifs sous forme de poudre et des dispersions adhésives aqueuses suivant la revendication 6 dans des masses auto-adhésives, des adhésifs pour plancher et dans des colles de construction.
